# EUROPEAN PATENT APPLICATION

(11) **EP 4 546 571 A1**
(43) Date of publication of application: **30.04.2025**
(21) Application number: 23205540.0
(22) Date of filing: 24.10.2023
(51) Int. Cl.: H01R 12/51, H01R 12/57, H01R 12/58

(54) **BATTERY POLE CONNECTOR**

(71) Applicant: Verisure Sàrl, 1290 Versoix (CH)
(72) Inventor: Mårtensson, Henrik, 226 52 Lund (SE)
(74) Representative: Hansson Thyresson AB

(57) **Abstract**

There is provided a battery pole connector for providing an electrical connection between a battery pole and a circuit board, the battery pole connector comprising: a soldering portion having a flat soldering surface for attachment to the circuit board and a lifting surface opposite the flat soldering surface for application of a suction pressure by a suction cup, and a pole connecting portion for providing electrical contact to the battery pole; wherein the soldering portion is provided with at least one projection for insertion into an opening of the circuit board, the projection protruding from the flat soldering surface, the projection comprising: a displaced section arranged at a distance from the flat soldering surface, and a wall section protruding from the soldering portion and connecting the soldering portion to an outer edge of the displaced section.

## Description

### TECHNICAL FIELD

The present invention relates to a battery pole connector, and more particularly to a battery pole connector for attachment to a circuit board, and a method of attaching the same.

### BACKGROUND

Electrical devices often comprise a circuit board, such as a printed circuit board, provided with electronic components. When the electrical devices are battery-powered, a contact must be made between the poles of the battery and the circuit board so as to provide power from the battery to the circuit board and its electronic components.

A known solution for providing contact between the poles of the battery and the circuit board is to provide the circuit board with an electrically conductive element which is configured to contact one of the poles of the battery. The electrically conductive elements are commonly soldered onto the circuit board.

However, the electrically conductive elements must withstand large axial forces from the battery. To achieve a structure that is capable of withstanding such forces, known electrically conductive elements are designed in a way that makes them difficult or impossible to accurately position and attach on a circuit board using an automated process. Furthermore, soldering of the electrically conductive elements to the circuit board often needs to be performed manually. The manufacturing process thus involves manual labour leading to high manufacturing costs as well as low output and yield.

Therefore, there is a need for improved electrically conductive elements, and manufacturing methods of circuit boards provided with these elements, that can overcome the above-described challenges.

### SUMMARY

The invention is defined by the appended independent claims. Additional features and advantages of the concepts disclosed herein are set forth in the description which follows, and in part will be clear from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

According to a first aspect, there is provided a battery pole connector for providing an electrical connection between a battery pole and a circuit board, the battery pole connector comprising: a soldering portion having a flat soldering surface for attachment to the circuit board and a lifting surface opposite the flat soldering surface for application of a suction pressure by a suction cup, and a pole connecting portion for providing electrical contact to the battery pole, the pole connecting portion comprising a spring extending away from the soldering portion; wherein the soldering portion is provided with at least one projection for insertion into an opening of the circuit board, the projection protruding from the flat soldering surface, the projection comprising: a displaced section arranged at a distance from the flat soldering surface, and a wall section protruding from the soldering portion and connecting the soldering portion to an outer edge of the displaced section.

The battery pole connector according to the first aspect, and in particular the projection, allows for attachment to a circuit board using surface mount technology and in particular automated surface mount technology by one or more robots. The optional positioning of the lifting surface opposite to the flat soldering surface allows the size of the battery pole connector to be reduced while still allowing it to be lifted by a robot using a suction pressure. Furthermore, the spring ensures that the battery pole connector is particularly advantageous for connection to a negative battery pole. The spring is optionally extending away from the soldering portion to allow (direct or indirect) connection with a battery which is located outside of the surface of the circuit board. The spring may alternatively extend in other directions, as long as the lifting surface remains suitable for application of a suction pressure.

Preferably, the spring extends in a direction substantially perpendicular to the projection, and/or is positioned to be substantially non-overlapping with the soldering portion. This is a preferred way of ensuring that the lifting surface is suitable for application of a suction pressure by a suction cup.

Preferably, the soldering portion comprises one or more arms extending from the soldering portion towards a free end of the spring. The one or more arms advantageously gives the battery pole connector a larger area on which it can rest when arranged on the circuit board, thus reducing the risk of imbalance during lifting, transportation and/or soldering of the battery pole connector.

Preferably, the arms extend, in the direction of the spring, past a centre of gravity of the battery pole connector. This ensures that the centre of gravity of the connector lies within the flat soldering surface and/or the lifting surface. Thus, the centre of gravity is properly supported ensuring that the battery pole connector can be lifted, transported and/or soldered in a satisfactory manner.

Preferably, the soldering portion is provided with one or more counterweights arranged on an opposite side of the projection compared to a free end of the spring. The counterweights reduce the risk of imbalance during lifting, transportation and/or soldering of the battery pole connector.

Preferably, the battery pole connector has a centre of gravity within the lifting surface and/or the flat soldering surface. This ensures that the centre of gravity of the connector lies within the flat soldering surface and/or the lifting surface. Thus, the centre of gravity is properly supported ensuring that the battery pole connector can be lifted, transported and/or soldered in a satisfactory manner.

Preferably, the pole connecting portion comprises one or more support structures having a surface in the same plane as the flat soldering surface, such that, when placed on an even surface, both the flat soldering surface and the one or more structures of the pole connecting portion can simultaneously rest on the even surface. The support structures accordingly give the battery pole connector a larger area on which it can rest when arranged on the circuit board, thus reducing the risk of imbalance during lifting, transportation and/or soldering of the battery pole connector.

Preferably, the support structures are arranged on the same side of the centre of gravity of the battery pole connector as a free end of the spring. This ensures that the centre of gravity is properly supported ensuring that the battery pole connector can be transported and/or soldered in a satisfactory manner.

Preferably, the pole connecting portion comprises an alignment structure for interaction with an edge of the circuit board, wherein the alignment structure extends in a plane perpendicular to the flat soldering surface, wherein a first end of the alignment structure is arranged at a side of the flat soldering surface provided with the projection, wherein a width of the alignment structure, in a direction parallel to the plane, decreases towards the first end. The alignment structure ensures that any small deviation in rotational alignment of the battery pole connector is corrected, which is particularly advantageous for battery pole connectors comprising a spring which extends away from the soldering portion.

According to a second aspect, there is provided a battery pole connector for providing an electrical connection between a battery pole and a circuit board, the battery pole connector comprising: a soldering portion having a flat soldering surface for attachment to the circuit board and a lifting surface opposite the flat soldering surface for application of a suction pressure by a suction cup, a pole connecting portion for providing electrical contact to the battery pole, wherein the soldering portion is provided with at least one projection for insertion into an opening of the circuit board, the projection protruding from the flat soldering surface, the projection comprising: a displaced section arranged at a distance from the flat soldering surface, and a wall section protruding from the soldering portion and connecting the soldering portion to an outer edge of the displaced section; wherein the pole connecting portion extends at least partially away from the soldering portion in a direction opposite to the projection.

The battery pole connector according to the second aspect, also allows for attachment to a circuit board using automated surface mount technology. The optional positioning of the lifting surface opposite to the flat soldering surface allows the size of the battery pole connector to be reduced while still allowing it to be lifted by a robot using a suction pressure. The pole connecting portion extending at least partially in a direction opposite the projection allows the battery pole connector to be used with a battery having a centre line above a component-provided surface of the circuit board while also reducing a soldering area required when used with batteries that exert large axial forces. It should be noted, though, that the pole connecting portion may alternatively extend away from the soldering portion in a direction of the projection to allow the battery pole connector to be used with batteries having a centre line below a component-provided surface of the circuit board.

Preferably, the pole connecting portion forms substantially a circular arc, and a central axis of the projection substantially coincides with a centre of curvature of the circular arc. Thus, the battery pole connector may be placed into an opening of the circuit board in a range or variety of angular orientations while ensuring contact with a battery in a predetermined battery position.

Preferably, the pole connecting portion comprises a sheet, at least a portion of which is bent into a rounded shape. Such a pole connecting portion is easy to manufacture and provides a great design flexibility. The rounded shape also allows a battery to be easily slid in place against the pole connecting portion.

Preferably, the bent portion of the sheet has a shape of an arc of a circle or ellipse. The shape of an arc is a particularly strong shape which is easy to form without requiring complex and/or expensive manufacturing equipment.

Preferably, the arc is an arc of at least 100 degrees, optionally at least 130 degrees, optionally at least 150 degrees, optionally at least 180 degrees. Preferably, the arc has an angle of less than 360 degrees, optionally less than 270 degrees, optionally less than 230 degrees. Preferably, the arc defines a portion of the sheet that is bent at least partly on itself. These arcs have been found to be particularly robust and strong, thus able to withstand axial forces from a battery without requiring additional support. Furthermore, a great design flexibility is provided by a pole connecting portion with this shape.

According to a third aspect, there is provided a circuit board comprising an opening for receiving a projection of a battery pole connector, and at least one battery pole connector according to the first or second aspect connected to the circuit board in an electrically conductive manner.

The circuit board can thus be formed using automated surface mount technology, and in particular, the battery pole connector may be mounted and/or soldered simultaneously with one or more other components on the circuit board.

According to a fourth aspect, there is provided an alarm system device comprising: a circuit board according to the third aspect; and at least one battery arranged to make contact with the pole connecting portion of the at least one battery pole connector.

By the use of the circuit board in accordance with the third aspect, the alarm system device can be manufactured at least partly in an automated and inexpensive process. Furthermore, the battery pole connector ensure that the batteries are securely positioned, and able to withstand shocks or impacts, without the batteries or the battery pole connectors coming lose and/or falling off, as required for alarm system devices.

According to a fifth aspect, there is provided a method of attaching a battery pole connector to a circuit board, the method comprising: providing a battery pole connector for providing an electrical connection between a battery pole and a circuit board, lifting the battery pole connector by means of a robot applying a suction pressure to a lifting surface of the battery pole connector, rotationally aligning, using a vision system of the robot, the battery pole connector in dependence on one or more visual alignment means of the battery pole connector, placing a projection of the battery pole connector into an opening of the circuit board, and soldering the battery pole connector to the circuit board.

The method according to the fifth aspect allows accurate alignment of the battery pole connector to the circuit board, which previously has required manual labour.

Preferably, the battery pole connector comprises: a soldering portion having a flat soldering surface for attachment to the circuit board and a lifting surface for application of a suction pressure, and a pole connecting portion for providing electrical contact to the battery pole; wherein the soldering portion is provided with at least one projection for insertion into the opening of the circuit board, the projection protruding from the flat soldering surface, the projection comprising: a displaced section arranged at a distance from the flat soldering surface, and a wall section protruding from the soldering portion and connecting the soldering portion to an outer edge of the displaced section. The battery pole connector may also be, for example, a battery pole connector according to the first and/or second aspects.

Preferably, the visual alignment means comprises: the lifting surface and/or the soldering portion having two or more edges or sides that are perpendicular to each other; the lifting surface and/or the soldering portion having a rectangular or square shape; the battery pole connector having a circular edge, a straight edge, or an edge in a shape of an arc; and/or one or more visual alignment indicators provided in or on the lifting surface and/or the soldering portion.

Preferably the pole connecting portion of the battery pole connector forms substantially a circular arc, and a central axis of the projection substantially coincides with a centre of curvature of the circular arc.

Preferably, the method further comprises a step of providing a soldering paste on a contact pad provided on the circuit board surrounding the opening, and wherein a capillary force and/or surface tension of the soldering paste is used to correct a deviating rotational alignment of the battery pole connector.

The soldering paste, when melted, ensures that any deviation in the rotational alignment is corrected. Thus, the battery pole connector may be accurately aligned using an automated process and the robot vision system.

According to a sixth aspect, there is provided a battery pole connector for providing an electrical connection between a battery pole and a circuit board, the battery pole connector comprising: a soldering portion having a flat soldering surface for attachment to the circuit board; and a pole connecting portion for providing electrical contact to the battery pole; wherein the soldering portion is provided with at least one projection for insertion into an opening of the circuit board. The projection may protrude from the flat soldering surface. The projection may comprise: a displaced section arranged at a distance from the flat soldering surface, and a wall section protruding from the soldering portion and connecting the soldering portion to an outer edge of the displaced section. The pole connecting portion preferably forms substantially a circular arc, and a central axis of the projection preferably substantially coincides with a centre of curvature of the circular arc.

The battery pole connector according to the sixth aspect allows for attachment to a circuit board using automated surface mount technology. Furthermore, the battery pole connector may be placed into an opening of the circuit board in a range or variety of angular orientations while ensuring contact with a battery in a predetermined battery position.

Preferably, the circular arc extends at least 45 degrees, optionally at least 60 degrees, optionally at least 90 degrees, optionally at least 120 degrees, optionally at least 150 degrees, optionally at least 180 degrees, optionally at least 225 degrees, optionally at least 270 degrees, optionally substantially 360 degrees. Hence, the freedom of angular orientation on the circuit board is increased.

Preferably, the pole connecting portion is substantially circular or cylindrical. This ensures that the battery pole connector may be placed in any angular orientation in the opening of the circuit board.

Optionally, the soldering portion is substantially circular and the pole connecting portion extends around a circumference of the soldering portion. Alternatively, the soldering portion substantially forms a circular segment or a circular sector and wherein the pole connecting portion extends along an edge of the soldering portion. Hence, the battery pole connector may be advantageously manufactured, e.g. from a disk, sheet, or plate, by deep drawing.

Preferably, the soldering portion comprises a lifting surface opposite the flat soldering surface for application of a suction pressure by a suction cup. Having the lifting surface opposite the soldering surface allows for a compact battery pole connector, reduces the amount of material used, and ensures a centre of gravity of the battery pole connector that allows it to be lifted by, for example, a robot.

Preferably, the pole connecting portion extends at least partially away from the soldering portion in a direction opposite to the projection. The pole connecting portion extending at least partially in a direction opposite the projection allows the battery pole connector to be used with a battery having a centre line above a component-provided surface of the circuit board.

In a seventh aspect, there is provided a circuit board comprising an opening for receiving a projection of a battery pole connector, and at least one battery pole connector according to the sixth aspect, wherein the battery pole connector is attached to the circuit board in an electrically conductive manner, wherein the pole connecting portion of the battery pole connector at least partially extends past an edge of the circuit board.

In an eight aspect, there is provided an alarm system device comprising: a circuit board according to the seventh aspect; and at least one battery arranged to make contact with the pole connecting portion of the at least one battery pole connector.

As used herein, the term "battery pole connector" refers to any connector component for providing an electrical connection between a battery pole and a circuit board. The battery may be an individual battery cell having respective poles, or an assembly of multiple battery cells. For example, the battery may be formed by a cartridge for containing multiple battery cells, the cartridge having or presenting battery poles for the multiple cells individually or collectively.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: shows a battery pole connector according to embodiments;
- Fig. 2: shows a battery pole connector being placed in an opening of a circuit board according to embodiments;
- Fig. 3: shows a circuit board provided with a battery pole connector according to embodiments;
- Fig. 4: shows a method of attaching a battery pole connector to a circuit board according to embodiments;
- Fig. 5: shows a battery pole connector comprising a spring and stabilising means according to embodiments;
- Fig. 6: shows a battery pole connector comprising a spring and stabilising means according to embodiments;
- Fig. 7: shows a battery pole connector being aligned on a circuit board according to embodiments;
- Fig. 8: shows two battery pole connectors being placed in an opening of a circuit board according to embodiments;
- Fig. 9: shows a circuit board provided with two battery pole connectors according to embodiments;
- Fig. 10: shows a battery pole connector according to embodiments;
- Fig. 11: shows battery pole connectors in angular rotations according to embodiments;
- Fig. 12: shows battery pole connectors according to embodiments; and
- Fig. 13: shows a circuit board provided with a battery pole connector according to embodiments.

Further, in the figures like reference characters designate like or corresponding elements or parts throughout the several figures. The first digit in the reference character denotes the first figure in which the corresponding element or part appears.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

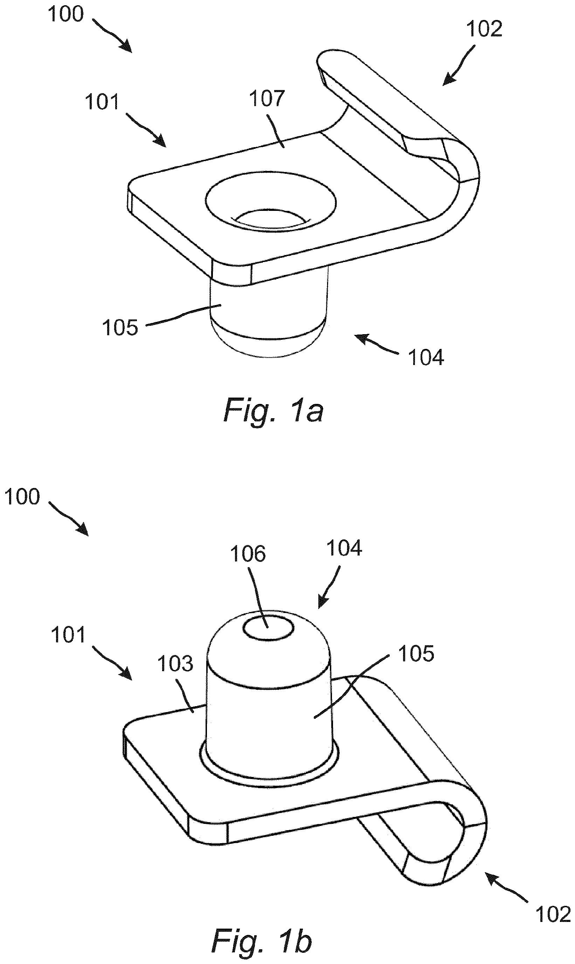

Fig. 1 shows a battery pole connector 100 according to embodiments. Fig. 1a shows the battery pole connector 100 from above, while Fig. 1b shows the battery pole connector 100 from below. The battery pole connector 100 is suitable for, and configured to be, attached to a circuit board 200 using surface mount technology, preferably using an automated surface mount technology process.

The battery pole connector 100 is an electrically conductive element intended to be attached to a circuit board 200, such as a printed circuit board, so as to provide an electrical contact between the circuit board 200 and an electrical pole of a battery. The battery pole connector 100 comprises a soldering portion 101 and a pole connecting portion 102.

The soldering portion 101 is configured to be attached to the circuit board 200. Preferably, the soldering portion 101 is configured to be attached to the circuit board 200 by soldering. The soldering portion 101 comprises a flat soldering surface 103 for attachment to the circuit board 200. In other words, the flat soldering surface 103 is a circuit board-facing surface of the soldering portion 101. In embodiments, the soldering portion 101 may be a substantially flat plate or sheet.

The soldering portion 101 is provided with at least one projection 104. The projection 104 is configured to be inserted into, or engage with, a corresponding opening 201 or through-hole in a circuit board 200. The projection 104 thus ensures that a strength of the soldering joint between the circuit board 200 and the soldering portion 101 is increased. The projection 104 also ensures that the battery pole connector 100 is placed in a correct location, i.e. at a location where the opening 201 in the circuit board 200 is located.

Preferably, the projection 104 protrudes from the flat soldering surface 103. The projection 104 may protrude in a direction substantially perpendicular to the soldering portion 101 and/or the flat soldering surface 103.

The projection 104 is formed by a wall section 105 and a displaced section 106. The displaced section 106 is arranged at a distance from the soldering portion 101, and in particular at a distance from the flat soldering surface 103. The wall section 105 connects the displaced section 106 to the soldering portion 101. The wall section 105 protrudes from the soldering portion 101 to an outer edge of the displaced section 106. That is, a first end of the wall section 105 is connected to the soldering portion 101 and a second opposite edge of the wall section 105 is connected to the displaced section 106.

In embodiments, the wall section 105 connects around the entire outer edge of the displaced section 106 so as to surround the displaced section 106. Thus, the displaced section 106 closes the second end of the wall section 105. A cavity is thus formed inside the wall section 105.

The soldering portion 101 further comprises a lifting surface 107 suitable for lifting the battery pole connector 100 by application of a suction pressure thereto. For example, a suction cup or suction pad may be placed on the lifting surface 107, and a suction pressure may be generated that can be used to lift the battery pole connector 100. The battery pole connector 100 is thus suitable for use in an automated soldering process, in particular in a surface mount technology soldering process and/or a soldering process using a robot. For example, a robot equipped with a suction cup can lift the battery pole connector 100 by placing the suction cup on the lifting surface 107.

Preferably, the lifting surface 107 is a surface opposite to the flat soldering surface 103. For example, if the soldering portion 101 is substantially a plate or a sheet, then the lifting surface 107 may be the surface of the plate or sheet opposite to surface with the projection 104. The lifting surface 107 may thus include an inside surface of the hollow projection 104. As the displaced section 106 closes a lower end of the hollow projection 104, the lifting surface 107 including the inside surface of the projection 104 is intact, and a suction pressure can thus be applied.

By having the soldering surface 103 and the lifting surface 107 provided on immediately opposite sides of same structure (e.g. on opposite sides of a plate or sheet forming the soldering portion 101), a size of the soldering portion 101 and/or battery pole connector 100 is reduced.

The projection 104 is preferably formed by deep drawing. A deep-drawn projection 104 is mechanically strong, and able to resist deformation during e.g. transport and/or handling. Deep drawing may also be performed for a variety of different projection shapes, giving greater design flexibility.

The projection 104 may have any shape suitable for insertion into, or engagement with, a corresponding opening 201 in the circuit board 200, such as cylindrical, conical, or cuboidal shape. The opening 201 in the circuit board 200 preferably has the same shape as the projection 104.

A cross-section of the projection 104 (e.g. in a plane parallel with the flat soldering surface 103) may be circular, elliptical, rectangular, or square. For example, the projection 104 may have an elongate cross-section, such as an elliptical or rectangular cross-section, or a cross-section comprising one or more corners, such as a square or rectangular cross-section. This limits the rotational freedom of the projection 104 such that the projection 104 can only be inserted into the opening 201 in the circuit board 200 in one or more specific, predetermined rotational orientations.

However, the projection 104 may typically be inserted into the opening 201 in the circuit board 200 in a plurality of rotational orientations. This is particularly true if the projection 104 has a circular, or otherwise symmetric, cross-section. The soldering portion 101 may therefore comprise one or more alignment means for facilitating rotational alignment of the battery pole connector 100 on the circuit board 200. The alignment means are configured to allow a robot that is lifting the battery pole connector 100 to insert the battery pole connector 100 into the opening 201 in the circuit board 200 at a correct rotational orientation.

The alignment means may comprise visual alignment means. The visual alignment means may be configured to be used by a vision system of a robot. For example, the lifting surface 107 and/or the soldering portion 101 may have two or more edges or sides that are perpendicular to each other (e.g. forming one or more corners). In particular, the lifting surface and/or the soldering portion 107 may have a rectangular or square shape. A vision system of a robot may recognise the perpendicular sides or edges and compare their orientation with sides or edges of the circuit board 200. For example, the robot may be configured to, using the vision system, rotationally align the battery pole connector 100 such that its two or more perpendicular edges or sides are aligned with a respective two or more perpendicular edges or sides of the circuit board 200.

Other examples of visual alignment means include one or more visual alignment indicators provided in or on the lifting surface 107 and/or the soldering portion 101. The alignment indicators may comprise, for example, a coloured (i.e. of different colour than another portion of the lifting surface 107) line, a notch, a mark, or the like, that can be identified by the robot vision system. For example, the robot vision system may recognise the coloured line and rotationally align the coloured line with one or reference lines, edges, or sides of the circuit board 200.

Alternatively, the robot may know the orientation of the circuit board 200, and rotationally align the one or more visual alignment means in dependence on the known orientation of the circuit board 200.

The cross-sectional area of the projection 104 (e.g. in a plane parallel with the flat soldering surface 103) may be larger near the flat soldering surface 103 than distant from the flat soldering surface 103. That is, the projection 104 is smaller close to its free end than near the flat soldering surface 103. For example, the cross-sectional area of the projection 104 may be tapered, e.g. the projection 104 may have a conical shape. As another example, the displaced section 106 may be at least partially dome-shaped or have a curved or round surface.

Such a projection shape facilitates insertion of the projection 104 into the opening 201 in the circuit board 200. For example, if there, at the start of insertion, exists a small lateral offset between the projection 104 and the opening 201, the shape of the projection 104 will guide the projection 104 into the opening 201 and thus remove said offset.

The soldering portion 101 is connected to the pole connecting portion 102. The pole connecting portion 102 is configured to connect, or provide electrical contact, to a battery pole of a battery. This may be achieved by the pole connecting portion 102 making contact with the battery pole, either directly (e.g. through a contacting surface of the pole connecting portion 102) or indirectly (e.g. via an intermediate electrical conductor such as a battery holder).

The pole connecting portion 102 may extend away from the soldering portion 101, e.g. in a direction opposite to the direction in which the projection 104 protrudes. For example, the pole connecting portion 102 may be bent in a direction away, or opposite, from the projection 104, e.g. upwards in Fig. 1a.

This ensures that the portion of the pole connecting portion 102 that makes contact, either directly or indirectly, with the battery pole is located above the surface of the circuit board 200, e.g. at a side of the circuit board 200 where components are located. Thus, the battery pole connector 100 can be used in devices where the battery centre line (i.e. the longitudinal axis of the battery) is above the circuit board 200.

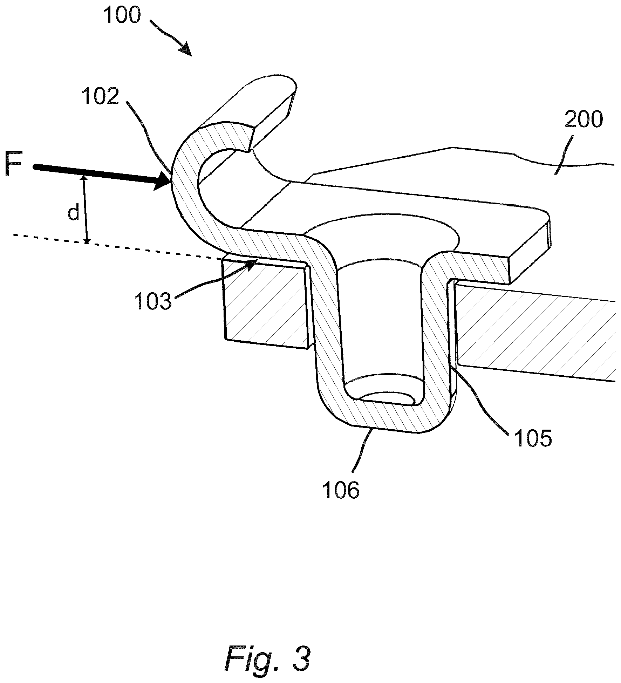

The battery is thus configured to make contact with the battery pole connector 100 above the surface of the circuit board 200, i.e. at a distance d from the surface as indicated in Fig. 3. The battery, when positioned to make contact with the battery pole connector 100, typically exerts an axial force on the battery pole connector 100 (e.g. by a spring 501 acting on an opposite pole of the battery so as to keep it securely in position). This axial force, as indicated by arrow F in Fig. 3, will accordingly act on the battery pole connector 100 at a distance d above the circuit board 200. Hence, a (mechanical) moment will be exerted on the battery pole connector 100 by the battery. The moment will act on the battery pole connector 100 in a lifting fashion near the pole connecting portion 102 (i.e. on a side of the projection 104 close to the pole connecting portion 102) and in a pressing fashion away from the pole connecting portion 102 (i.e. on a side of the projection 104 distant from to the pole connecting portion 102). It is therefore especially important to provide a strong soldering (e.g. a large soldering area) on a side of the projection 104 close to the pole connecting portion 102 to avoid the battery pole connector 100 lifting or peeling off the circuit board 200.

The inventors have found that, because the opening 201 in the circuit board 200 cannot be placed too close to an edge of the circuit board 200, the area between the opening 201 and the edge of the circuit board 200 offers a sufficiently large soldering area to withstand the moment exerted by the battery. Hence, an area of the flat soldering surface 103, and the amount of space occupied on the circuit board 200, may be minimised.

This is advantageous compared to a battery pole connector 100 where the pole connecting portion 102 lies below the soldering surface 103 (i.e. the pole connecting portion 102 extending in the same direction as the projection 104, e.g. downwards in Fig. 3), because the moment exerted by the battery on the battery pole connector 100 on such a battery pole connector will act in a lifting fashion on a side of the projection 104 away from the pole connecting portion 102. It would thus have been necessary to increase the area of the flat soldering surface 103 on this side of the projection 104 (to avoid the battery pole connector 100 from lifting or peeling off the circuit board 200), while still requiring the same area on a side of the projection 104 close to the pole connecting portion 102 (because it is not possible to move the opening 201 or projection 104 too close to the edge of the circuit board 200).

It will be appreciated, though, that embodiments include a pole connecting portion 102 that alternatively extends in the same direction as the projection 104 protrudes. The pole connecting portion 102 would thus be able to make contact, either directly or indirectly, with a battery pole located below the surface of the circuit board 200, e.g. below a surface of the circuit board 200 where components are located. Thus, the battery pole connector 100 can be used in devices where the battery centre line (i.e. the longitudinal axis of the battery) is below the surface of the circuit board 200.

The pole connecting portion 102 may be bent to form an arc of a circle or ellipse. An arc has been found to be a particularly strong shape that can withstand axial forces (indicated by the arrow F in Fig. 3) exerted by the battery making contact with the pole connecting portion 102. The rounded or smooth surface provided by an arc also advantageously allow a battery to be smoothly slid down along the arched surface into the battery's intended position. In particular, the arched surface may lack any sharp edges on which a pole of a battery (e.g. a protruding shallow cylinder at the positive pole of a common battery) may get stuck, preventing the battery from reaching its intended position.

Preferably the arc is an arc of at least 100 degrees, preferably at least 130 degrees, yet more preferably at least 150 degrees, optionally about 180 degrees. The arc may be less than 360 degrees, optionally less than 270 degrees, optionally less than about 230 degrees. The arc may define a portion that is bent and/or folded at least partly on itself. Additionally or alternatively, the pole connecting portion 102 may be bent to form substantially a semicircle or semi-ellipse. This will ensure a strong pole connecting portion 102 that can withstand large axial forces.

The pole connecting portion 102 and the soldering portion 101 may be formed from an integral piece of material, e.g. a sheet or a plate. For example, the pole connecting portion 102 and the soldering portion 101 may be formed by one or more bending operations or stamping operations of the sheet or plate. For example, both portions may be formed from a single sheet that has been bent and/or stamped to form the different portions.

The battery pole connector 100 is at least partially made from an electrically conductive material such that the battery pole connector 100 can electrically connect the battery pole to the circuit board 200. For example, the battery pole connector 100 is made from an electrically conductive metal such as bronze, copper, steel, or the like. Preferably, the battery pole connector 100 has a nickel plating.

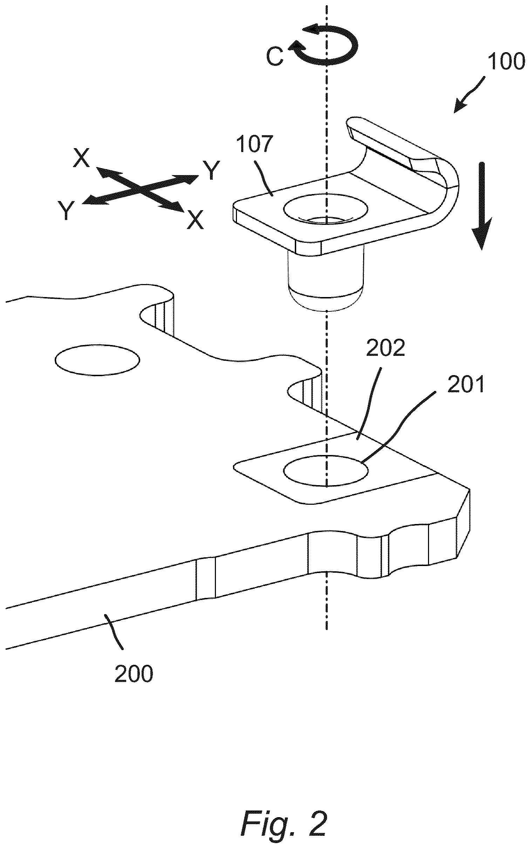

Fig. 2 shows a battery pole connector 100 to be attached to a circuit board 200. In particular, the projection 104 of the battery pole connector 100 is configured to be inserted into the opening 201 of the circuit board 200.

The circuit board 200 may be a printed circuit board. The circuit board 200 may be a circuit board 200 for use in an electronic device. For example, the circuit board 200 may be a part of, or intended to be part of, an electronic device, and in particular a battery-powered electronic device. Examples of an electronic device for use with the circuit board 200 include, but are not limited to, a remote control, a communication interface, a sensor or detector, and/or a device of an alarm system or an intruder detection system.

The circuit board 200 comprises one or more openings 201 for receiving a respective one or more battery pole connectors 100. The area of the circuit board 200 around the opening 201 and onto which the flat soldering surface 103 of the battery pole connector 100 is to be attached is preferably provided with a contact pad 202 with a shape and size corresponding to a shape and size of the flat soldering surface 103 of the battery pole connector 100. The contact pad 202 is preferably provided with a solder paste.

When attaching the battery pole connector 100 to the circuit board 200, and in particular when inserting the projection 104 into the opening 201, alignment of the battery pole connector 100 relative to the circuit board 200 and the opening 201 needs to be performed. The battery pole connector 100 needs to be aligned both laterally and rotationally.

Lateral alignment refers to alignment or positioning of the battery pole connector 100 in the plane of the circuit board 200, as indicated in Fig. 2 by the arrows X and Y. Lateral alignment may also be referred to as translational alignment. Lateral alignment of the battery pole connector 100 is performed such that the projection 104 coincides with the opening 201 in the circuit board 200, thus allowing the projection 104 to be inserted into the opening 201. Coinciding with the opening 201 may be defined as at least partially overlapping, and preferably substantially or completely overlapping, with the opening 201. For example, a central or longitudinal axis of the projection 104 may coincide the opening 201, and preferably coincide with a central or longitudinal axis of the opening 201.

The battery pole connector 100 also needs to be rotationally aligned. Rotational alignment refers to alignment of the battery pole connector 100 around a central or longitudinal axis of the projection 104 (or other axis of the battery pole connector 100), as denoted by the arrow C in Fig. 2. In particular, the battery pole connector 100 must be rotated such that the pole connecting portion 102 faces a direction in which a pole of a battery can contact (either directly or indirectly) the pole connecting portion 102. For example, the battery pole connector 100 must be rotationally aligned such that the pole connecting portion 102 is located outside of, or along, an edge of the circuit board 200. The battery pole connector 100 may also be rotationally aligned such that at least portion of the pole connecting portion 102 is substantially parallel to an edge of the circuit board 200.

The lateral alignment and/or the rotational alignment may be performed in dependence on one or more of the previously described visual alignment means of the battery pole connector 100. For example, in an automatic alignment process, a robot vision system of a robot may perform the lateral and/or rotational alignment in dependence on said visual alignment means.

Once the battery pole connector 100 has been laterally and rotationally aligned, the projection 104 may be inserted into the opening 201 and the flat soldering surface 103 may be lowered into contact with the circuit board 200, and in particular the contact pad 202 and/or the soldering paste provided on the contact pad 202.

After the flat soldering surface 103 has been lowered or pressed onto the contact pad 202 provided with soldering paste, a soldering process is performed to form a solder joint between the flat soldering surface 103 and the contact pad 202. As the soldering process is performed and the soldering paste thus melts, capillary forces and/or surface tension of the soldering paste can be used to ensure that any unintended deviation in the rotational alignment of the battery pole connector 100 is corrected. In other words, the capillary forces and/or surface tension of the soldering paste can be used to correct any deviation in alignment between the flat soldering surface 103 and the contact pad 202. This is possible since the contact pad 202 and the flat soldering surface 103 have distinct edges, corners, and/or sides (as opposed to e.g. a circle), and so the capillary forces and/or surface tension will strive to align the edges, corners, and/or sides of the flat soldering surface 103 with respective edges, corners, and/or sides of the contact pad 202.

The inventors have realised that although an alignment by a robot vision system in dependence on one or more visual alignment means may cause a slight deviation, this deviation can be sufficiently corrected by the capillary forces and/or surface tension of the soldering paste provided on the contact pad 202. Thus, a good rotational alignment may be achieved by the use of a robot vision system and visual alignment means.

Although rotational alignment has been described as a step performed prior to insertion of the projection 104 into the opening 201, it will be understood that embodiments also include rotational alignment performed after insertion of the projection 104 into the opening 201.

Fig. 3 shows a cross-section of a circuit board 200 provided with a battery pole connector 100. The circuit board 200 comprises an opening 201 into which a projection 104 of the battery pole connector 100 has been inserted. The battery pole connector 100 is identical to the previously described battery pole connector 100.

The size of the opening 201 in the circuit board 200 is preferably slightly larger than the size of the projection 104. In other words, a small gap may be present around the projection 104 when inserted into the opening 201. This allows for solder paste to be placed in the gap such that a solder joint can be formed around the projection 104 (in addition to under the flat soldering surface 103).

It will be appreciated that although an opening 201 in the form of a through-hole is shown in the circuit board 200, other forms of openings 201 are encompassed by embodiments.

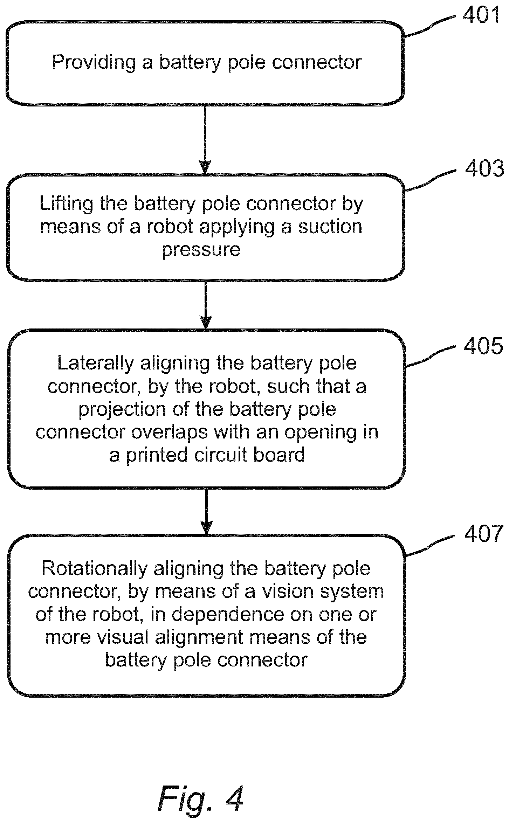

Fig. 4 shows a method of attaching a battery pole connector 100 to a circuit board 200.

In step 401, a battery pole connector 100 is provided. The battery pole connector 100 is similar or identical to the battery pole connector 100 previously described.

In step 403, the battery pole connector 100 is lifted by application of a suction pressure or vacuum. The suction pressure is preferably applied by a suction cup of a robot. The suction pressure is applied to the lifting surface 107 of the battery pole connector 100. The suction pressure is sufficiently low to allow the suction cup to lift the weight of the battery pole connector 100.

In step 405, the battery pole connector 100 may be laterally or translationally aligned, by the robot, over a circuit board 200, such that the projection 104 of the battery pole connector 100 coincides with a corresponding opening 201 in the circuit board 200. The lateral alignment may be performed in dependence on a robot vision system, and optionally in dependence on one or more visual alignment means of the battery pole connector 100. It will be appreciated that embodiments include any other suitable method of laterally aligning the battery pole connector 100 with the opening 201 in the circuit board 200.

In step 407, the battery pole connector 100 is rotationally aligned in dependence on one or more visual alignment means of the battery pole connector 100. The rotational alignment is performed by means of a vision system of the robot. In embodiments, any deviation in the rotational alignment by the robot is corrected by capillary forces and/or surface tension of the soldering paste provided on the contact pad 202 surrounding the opening 201 in the circuit board 200. It will be appreciated that embodiments include any other suitable method of rotationally aligning the battery pole connector 100.

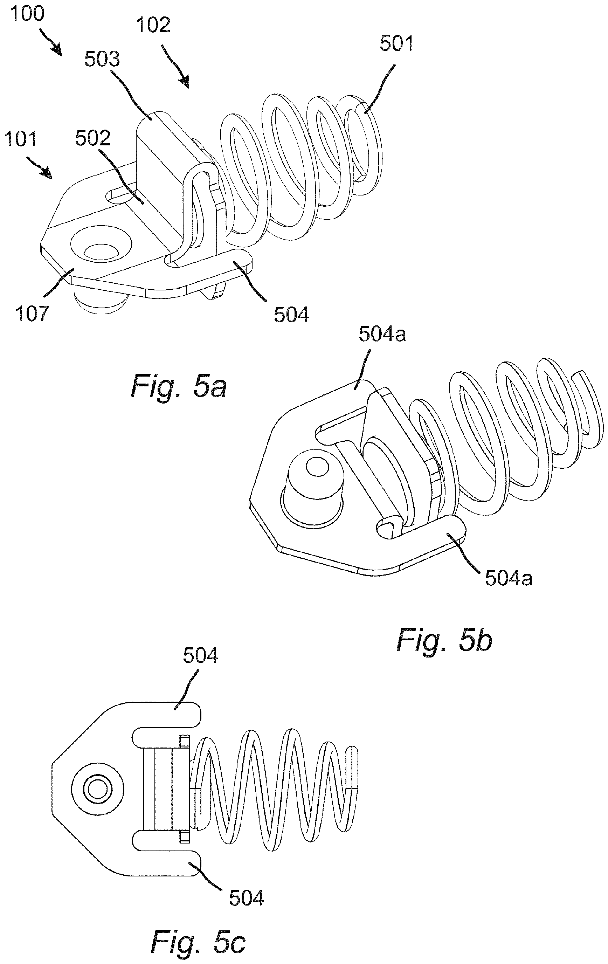

Fig. 5 shows a battery pole connector 100 with a pole connecting portion 102 comprising a spring 501. Fig. 5a shows the battery pole connector 100 in a first perspective view from above. Fig. 5b shows the battery pole connector 100 in a second perspective view from below. Fig. 5c shows the battery pole connector 100 in a top view.

The battery pole connector 100 shown in Fig. 5 is particularly advantageous for connection to a negative pole of a battery. It will be appreciated that, apart from the addition of the spring 501, the battery pole connector 100 shown in Fig. 5 is substantially similar or identical to the previously described battery pole connector 100. It will accordingly be understood that the above-described features of the battery pole connector 100, and in particular the soldering portion 101, also applies to the battery pole connector 100 of Fig. 5 unless otherwise stated.

The pole connecting portion 102 may comprise a spring 501. The spring 501 may be a helical spring, such as an elongate helical spring. Alternatively, the spring 501 may be a blade spring which is optionally integrated in the pole connecting portion. The spring 501 allows an axial force to be applied to the battery pole, to ensure that the battery is securely kept in place between the battery pole connector 100 and a second battery contacting surface.

The spring 501 is preferably positioned in a way that does not interfere with the lifting surface 107 of the soldering portion 101. That is, the lifting surface 107 is accessible by a suction cup or the like, even when the pole connecting portion 102 comprises a spring 501. In other words, the spring 501 does not make the lifting surface 107 unsuitable for application of a suction pressure.

In the illustrated example, the spring 501 (e.g. at least a helical portion of the spring 501) is substantially non-overlapping with the lifting surface 107.

The spring 501 may extend away from the soldering portion 101 and/or the lifting surface 107. For example, the spring may extend away from the soldering portion 101 and/or the lifting surface 107 in a direction that is generally parallel with the soldering portion 101 and/or the lifting surface 107.

In the illustrated example, the spring 501 may extend substantially perpendicular to the projection 104 as shown in Fig. 5. In particular, the spring 501 may, when the battery pole connector 100 is mounted on a circuit board 200, extend parallel to a surface of the circuit board 200 and an end portion (e.g. both end opposite portions) of the spring 501 may be outside an edge of the circuit board 200.

To accommodate the spring 501, the pole connecting portion 102 may comprise a first bend 502 away from the soldering portion 101 in a direction opposite to the projection 104, and a second bend 503 back towards the soldering portion 101 in a direction parallel to the projection 104. The first bend 502 allows the pole connecting portion 102 to make contact with a battery pole above a surface of the circuit board 200 on which the battery pole connector 100 is mounted.

By virtue of at least the second bend 503, the pole connecting portion 102 may include a portion that is folded and/or bent at least partly on itself. The second bend 503 may define an arc of at least 100 degrees, preferably at least 130 degrees, yet more preferably at least 150 degrees, optionally about 180 degrees. The arc may be less than 360 degrees, optionally less than 270 degrees, optionally less than about 230 degrees.

The spring 501 may have a non-negligible mass, which may move the centre of mass or gravity of the battery pole connector 100 outside of the flat soldering surface 103 and/or the lifting surface 107. This may cause problems when the suction cup lifts the battery pole connector 100 by a suction pressure and/or during the soldering process when the battery pole connector 100 is placed on the circuit board 200 but not yet securely soldered thereto.

For example, if the centre of mass or gravity is far from the flat soldering surface 103 and/or the lifting surface 107, the suction cup may struggle to retain the battery pole connector 100, and a side of the suction cup may lose contact with the lifting surface 107 causing the suction cup to drop the battery pole connector 100.

Furthermore, problems may arise in keeping the battery pole connector 100 in position before and during the soldering process. For example, once the battery pole connector 100 has been placed in position on the circuit board 200, the circuit board 200 may be transported or moved, by e.g. conveyor belts, robots, or the like, to a soldering apparatus. During this transport or movement, the circuit board 200 and the battery pole connector 100 may be subject to vibrations, impacts and/or shocks. This may cause the battery pole connector 100 to tipple over if the centre of mass or gravity is not properly supported. Furthermore, after said transport, it is important that the flat soldering surface 103 lies flat against the surface of the circuit board 200 in order to achieve adequate soldering.

The inventors have realised that these problems may be overcome by the battery pole connector 100 comprising stabilising means. The stabilising means may be configured to ensure that the centre of mass or gravity of the battery pole connector 100 lies (i) within the lifting surface 107, (ii) within the flat soldering surface 103, and/or (iii) within the surface of the circuit board 200 when the pole battery pole connector 100 is mounted thereon. Alternatively, or additionally, the stabilising means are configured to support the centre of mass or gravity of the battery pole connector 100.

The stabilising means may comprise one or more arms 504 extending from the soldering portion 101 as shown in Fig. 5. The one or more arms 504 may extend in a direction of the spring 501. Preferably, the arms 504 extend in the direction of the spring 501 past the centre of mass or gravity of the battery pole connector 100. The arms 504 are thus able to support the centre of mass or gravity of the battery pole connector 100 even if the centre of mass or gravity lies outside of the soldering portion 101. Hence, the arms 504 can ensure that the battery pole connector 100 is stable when mounted or placed on the circuit board 200.

The arms 504 may extend in the same plane as the soldering portion 101. In particular, a first surface 504a of the arms 504 is preferably located in the same plane as the flat soldering surface 103. The arms 504 may thus form part of the soldering surface 103.

Preferably, the stabilising means comprise two arms 504 located on either side of the pole connecting portion 102. Thus, a symmetric battery pole connector 100 is achieved which allows the centre of mass or gravity to be located along a central axis of the battery pole connector 100.

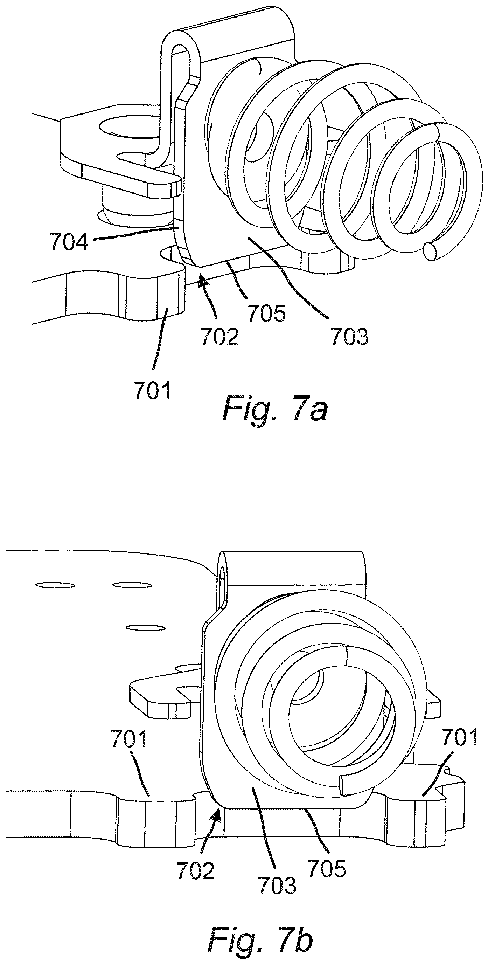

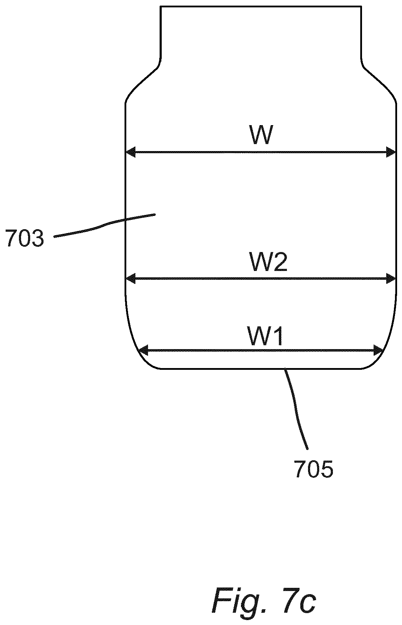

The circuit board 200 may be provided with one or more respective abutments 701 (shown in Fig. 7) onto which the arms 504 may rest when the battery pole connector 100 is placed on the circuit board 200. The abutments 701 may protrude from an edge of the circuit board 200.

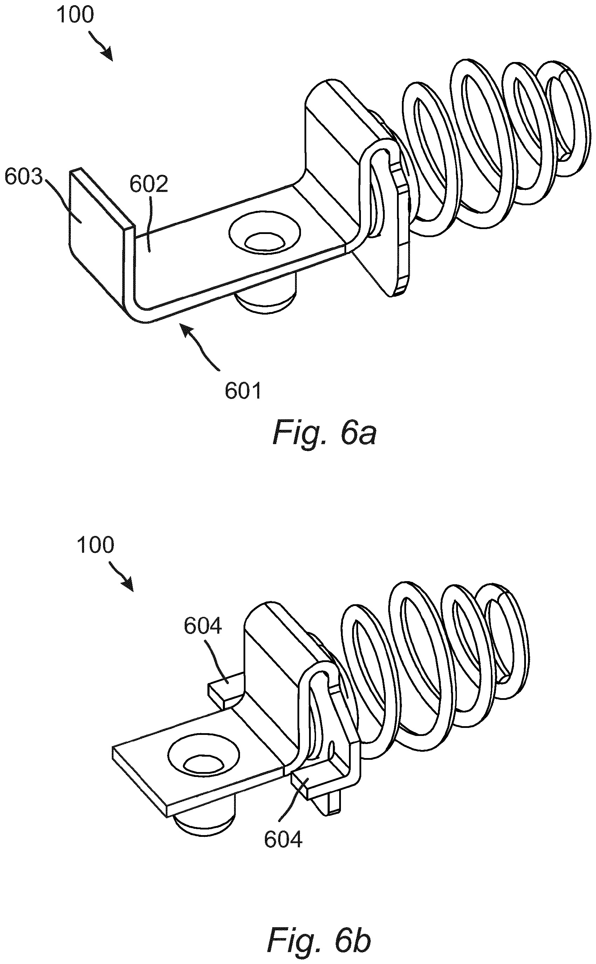

The stabilising means may additionally or alternatively comprise one or more counterweights 601 as shown in Fig. 6a. The counterweights 601 may be located on an opposite side of the projection 104 compared to the spring 501 (or at least the free end of the spring 501). The counterweight 601 may thus move the centre of mass of gravity of the battery pole connector 100 away from the free end of the spring 501 (e.g. towards the soldering portion 101 and/or the projection 104). Preferably, the counterweight 601 moves the centre of gravity or mass sufficiently to ensure that the centre of mass or gravity lies (i) within the lifting surface 107, (ii) within the flat soldering surface 103, and/or (iii) within the surface of the circuit board 200 when the pole battery connector is mounted thereon.

The counterweight 601 may comprise an extension 602 of the soldering portion 101. At least part of the counterweight 601 may thus form part of the flat soldering surface 103. Thus, when the battery pole connector 100 rests on the flat soldering surface 103 when mounted on the circuit board 200, it remains in a stable position. At least a portion 603 of the extension may be bent in an opposite direction to the projection 104 (e.g. away from the surface of the circuit board 200 when mounted thereon) to reduce the required surface area of the circuit board 200 that is covered by the battery pole connector 100 when mounted thereon.

The stabilising means may yet additionally, or alternatively, comprise one or more support structures 604 provided on, or as part of, the pole connecting portion 102 as shown in Fig. 6b. In other words, the pole connecting portion 102 may comprise the one or more support structures 604.

The support structure 604 may comprise a first surface (the side underneath the support structure 604 as shown in Fig. 6b) in the same plane as the flat soldering surface 103. The battery pole connector 100 may thus rest on both the soldering surface 103 and the support structures 604 when placed on the circuit board 200. The circuit board 200 may comprise one or more abutments 701 onto which the support structures 604 may rest.

The one or more support structures 604 are preferably located on the same side of the centre of mass or gravity of the battery pole connector 100 as the free end of the spring 501. The support structures 604 are thus able to support the centre of mass or gravity of the battery pole connector 100 even if the centre of mass or gravity lies outside of the soldering portion 101. Hence, the support structures 604 can ensure that the battery pole connector 100 is stable when mounted or placed on the circuit board 200.

The support structures 604 may be formed by bending a section of the pole connecting portion 102 such that a first surface of the bent section is in the same plane as the flat soldering surface 103. However, it will be appreciated that embodiments are not limited to a support structure formed by bending the pole connecting portion 102, and that other suitable support structures 604 are included in embodiments.

Preferably, the pole connecting portion 102 comprises two support structures 604, one on either side of the spring 501. Thus, a symmetric battery pole connector 100 is achieved which allows the centre of mass or gravity to be located along a central axis of the battery pole connector 100.

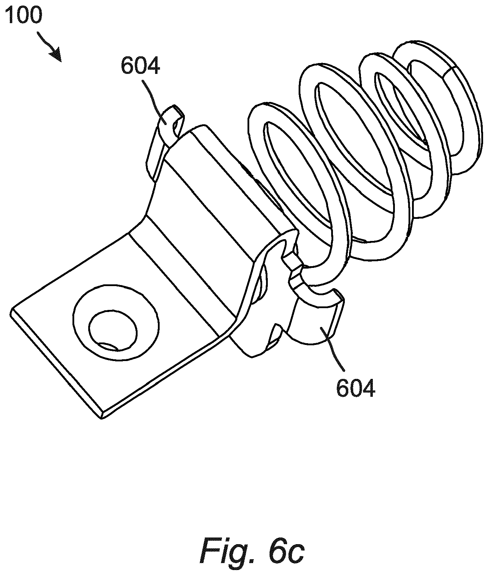

Fig. 6c shows an alternative arrangement of support structures 604. In this illustrative embodiment, the support structures 604 extend away from the soldering portion 103. That is, the support structures 604 extend in the same direction as the spring 501.

Fig. 7 shows the use of the pole connecting portion 102 in aligning the battery pole connector 100. Figs. 7a and 7b shown a perspective view of the battery pole connector 100 being placed on the circuit board 200. Fig. 7c shows a front view of the battery pole connector 100 (note that the spring 501 is not shown).

It is especially important that spring-provided battery pole connectors 100, such as those shown in Figs. 5 and 6, are aligned accurately. In particular, an accurate rotational alignment is necessary. This is due to the elongated spring 501 extending away from the soldering portion 101, causing a small rotational misalignment at the soldering portion 101 to be exaggerated to a relatively larger misalignment at a free end of the spring 501. The relatively larger misalignment of the free end of the spring 501 may cause the spring 501 to make poor contact with the battery pole.

The inventors have realised that the pole connecting portion 102 may be used to ensure that the rotational alignment is sufficiently accurate. To this effect, the pole connecting portion 102 may comprise an alignment structure 702 which extends in a plane perpendicular to the flat soldering surface 103. The alignment structure 702 may be substantially in the shape of a plate having two main surfaces 703 (only one of which can be seen in Fig. 7) and a circumferential surface 704 joining the two main surfaces. One of the main surfaces 703 (not shown in Fig. 7) may be arranged to face the soldering portion 101 while the second of the main surfaces 703 (e.g. the surface provided with the spring 501) faces away from the soldering portion 101.

A first end 705 of the alignment structure 702 may extend below the flat soldering surface 103. That is, the first end 705 of the alignment structure 702 may be arranged at a side of the flat soldering surface 103 provided with the projection 104.

The circumferential surface 704 may be configured to perform the alignment of the battery pole connector 100. In particular, the circumferential surface 704 may interact with abutments 701 on the circuit board 200. For example, there may be provided two abutments 701 such that the alignment structure 702 is at least partially arranged between the two abutments 701 when the battery pole connector 100 is placed or mounted on the circuit board 200.

The alignment structure 702 has a width W, i.e. a distance between two opposing sides of the alignment structure 702, and in particular between two opposing sides of the main surfaces, in a direction parallel to the flat soldering surface 103. The width W may also be defined as a width in a direction perpendicular to a central or longitudinal axis of the elongate helical spring 501.

The width W of the alignment structure 702 preferably decreases towards the first end, i.e. W1 is less than W2 as shown in Fig. 7. For example, the main surfaces 703 may be rounded or angled towards the first end to achieve this decrease in width.

Thus, when the battery pole connector 100 is lowered onto the circuit board 200 and a small rotational misalignment is present, the alignment structure 702, and preferably the circumferential surface, interacts with the abutments 701, causing any misalignment of the battery pole connector 100 to be corrected.

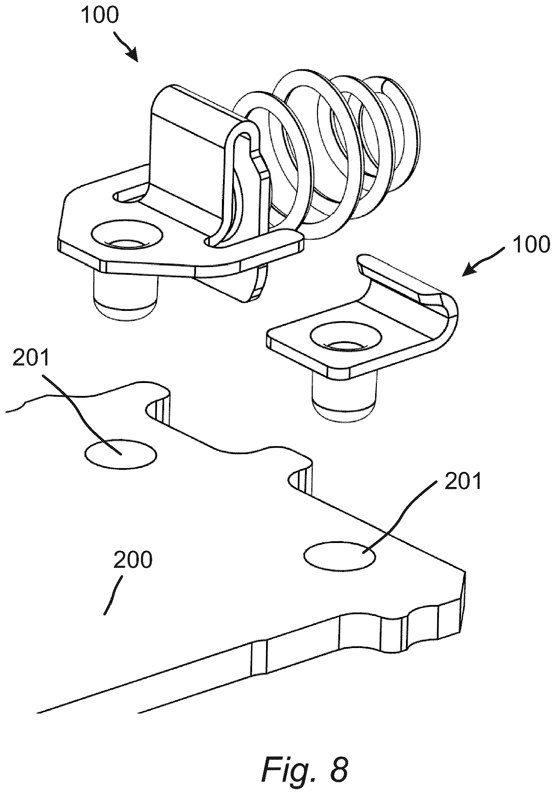

Fig. 8 shows a circuit board 200 being provided with two battery pole connectors 100, a first battery pole connector 100 as shown in Figs. 1 to 3, and a second battery pole connector 100 provided with a spring 501 as shown in Figs. 5 to 7. The first battery pole connector 100 may be configured to contact a positive pole of a first battery. The second battery pole connector 100 may be configured to contact a negative pole of a second battery.

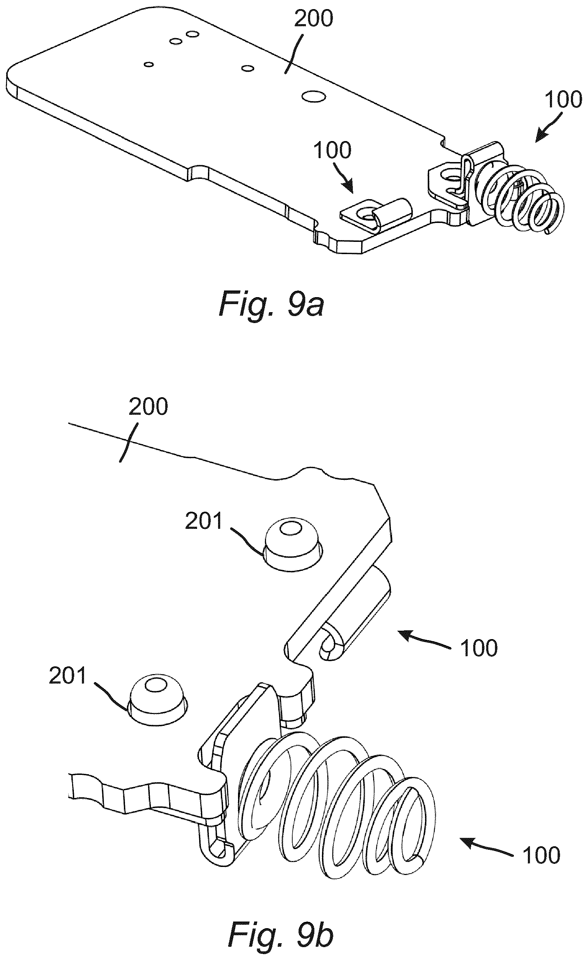

Fig. 9 shows a circuit board 200 provided with the two battery pole connectors 100 shown in Fig. 8. It will be appreciated that although Figs. 8 and 9 show a first battery pole connector 100 without a spring 501 and a second battery pole connector 100 with a spring 501, embodiments include any combination of battery pole connectors 100 provided on a circuit board 200, including two battery pole connectors 100 with springs 501 and/or two battery pole connectors 100 without springs 501.

A circuit board 200 provided with battery pole connector(s) 100, such as those shown in Fig. 9, is particularly advantageous for battery powered electronic devices in which the batteries must be securely positioned. For example, circuit boards 200 according to embodiments are particularly advantageous in electronic devices which must, e.g. by legal regulations, withstand shocks or impacts, without the batteries or the battery pole connectors 100 coming lose and/or falling off or out. These devices typically require larger axial forces holding the battery in place (e.g. by a strong spring 501), thus requiring battery pole connectors 100 that can withstand such axial forces.

Examples of such devices include alarm system devices and/or intruder detection devices, such as detectors for detecting movement, detectors for detecting opening/closing of doors and/or windows or the like.

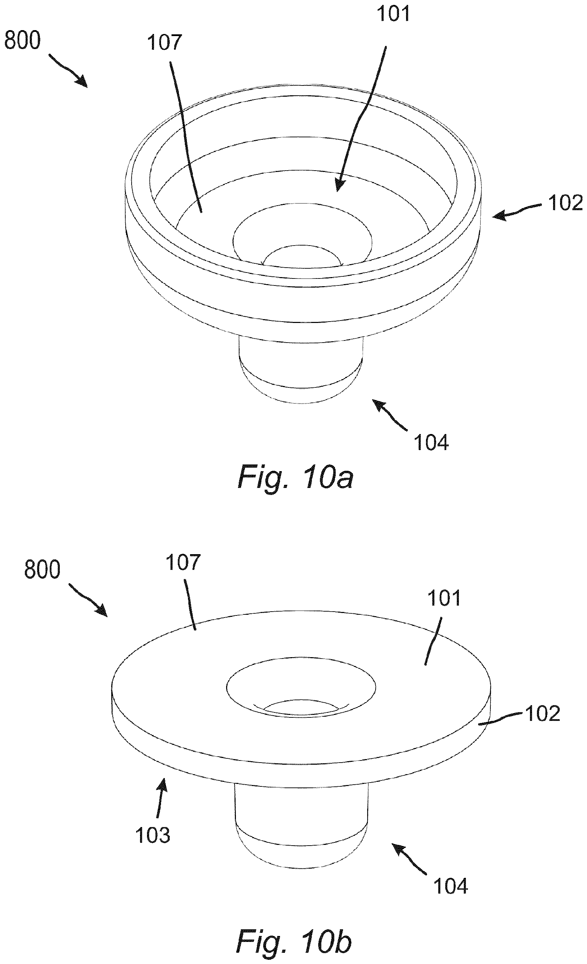

Figs. 10a and 10b show battery pole connectors 800 according to embodiments. The battery pole connectors 800 shown in Fig. 10 are similar to the previously described battery pole connectors 100. It will be understood that the above-described features of the battery pole connectors 100 also applies to the battery pole connectors 800 of Fig. 10 unless stated otherwise.

The battery pole connector 800 comprises a soldering portion 101 and a pole connecting portion 102, as previously described.

The soldering portion 101 further comprises a lifting surface 107 and a flat soldering surface, as previously described. Preferably, the lifting surface 107 is opposite to the flat soldering surface 103.

The soldering portion 101 further comprises a projection 104 for insertion into an opening of a circuit board. The projection 104 may be substantially similar to the previously described projections 104.

The battery pole connector 800 is capable of being placed in a plurality or a range of angular orientations in an opening of a circuit board while ensuring contact between the pole connecting portion and the battery in a predetermined battery position.

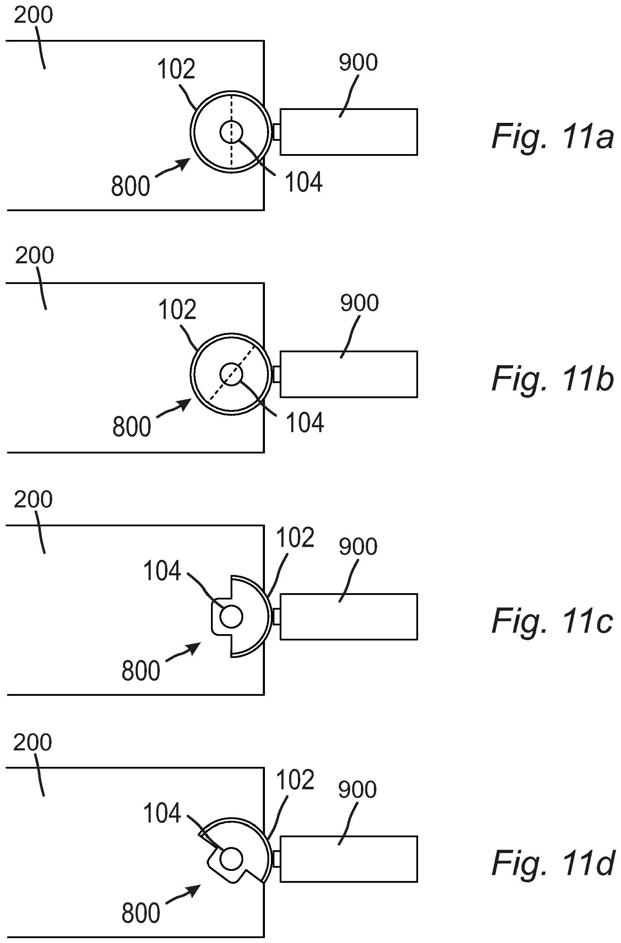

This can be seen in Figs. 11a and 11b which show an exemplary battery pole connector 800 in two different angular orientations (as indicated by the dashed line shown purely for illustrative purposes). Figs. 11c and 11d show an alternative exemplary battery pole connector 800 arranged in the opening of the circuit board 200 in two different angular orientations. Note that the position of the battery 900 does not need to be altered when the angular orientation of the battery pole connector 800 is changed.

Hence, the battery pole connector 800 may be considered at least partially rotationally symmetric. That is, the battery pole connector 800 is rotationally symmetric to an extent that allows the battery pole connector 800 to be placed in an opening of the circuit board 200 in a plurality or range of angular orientations while still allowing the pole connecting portion 102 to make contact with a battery 900 in a predetermined battery position.

In particular, the battery pole connector 800 may be at least partially rotationally symmetric about an axis perpendicular to the flat soldering surface 103, for example about a central axis extending through the projection 104.

In embodiments, the pole connecting portion 102 is rotationally symmetric over an angular range relative to the projection 104. For example, the pole connecting portion 102 may be rotationally symmetric over an angular range of at least 45 degrees, optionally at least 60 degrees, optionally at least 90 degrees, optionally at least 120 degrees, optionally at least 150 degrees, optionally at least 180 degrees, optionally at least 225 degrees, optionally at least 270 degrees, optionally substantially 360 degrees.

The rotational symmetry of the pole connecting portion 102 relative to the projection 104, may be achieved by the pole connecting portion 102 being substantially formed as a circular arc. That is, the pole connecting portion 102 may be formed as a circular arc in a plane parallel to the flat soldering surface 103. The circular arc preferably has a centre of curvature which substantially coincides or aligns with a central axis of the projection 104. In other words, the pole connecting portion 102 forms at least part of a circle centred around the projection 104.

The circular arc may extend at least 45 degrees, optionally at least 60 degrees, optionally at least 90 degrees, optionally at least 120 degrees, optionally at least 150 degrees, optionally at least 180 degrees, optionally at least 225 degrees, optionally at least 270 degrees, optionally substantially 360 degrees. In embodiments, the pole connecting portion 102 may substantially form a circle, i.e. the pole connecting portion 102 may be substantially circular or round.

The soldering portion 101, and in particular the flat soldering surface 103, may be substantially circular and/or round. Alternatively, the soldering portion 101, and in particular the flat soldering surface 103, may substantially form a circular segment or disk segment. A circular segment or disk segment may be defined as a region of a disk or circle which is "cut off" from the rest of the disk or circle by a secant or a chord. Yet as another alternative, the soldering portion 101, and in particular the flat soldering surface 103, may substantially form a circular sector.

The pole connecting portion 102 may at least partially surround the soldering portion 101. For example, the pole connecting portion 102 may extend along an edge of the soldering portion 101. For example, if the soldering portion 101 is circular or round, the pole connecting portion 102 may extend along a circumference of the soldering portion 101.

The projection 104 is preferably formed such that it allows insertion into an opening of a circuit board 200 in a plurality or range of angular orientations. Preferably, a cross-section of the projection 104 (e.g. in a plane parallel with the flat soldering surface 103) is substantially circular or round.

The at least partial rotational symmetry of the battery pole connector 800 reduces and/or eliminates the need for rotational alignment means. The battery pole connector 800 may be placed on the circuit board in any rotational orientation and/or in a range of varying angular rotations.

In embodiments, the battery pole connector 800 comprises rotational alignment means for facilitating broad or rough rotational alignment of the battery pole connector 800 on the circuit board 200. The alignment means are configured to allow a robot that is lifting the battery pole connector 800 to insert the battery pole connector 800 into the opening 201 in the circuit board 200 at a suitable rotational orientation.

The alignment means may comprise visual alignment means. The visual alignment means may be configured to be used by a vision system of a robot. For example, the visual alignment means may comprise the battery pole connector 800 comprising a circular edge, or an edge of an arc. Alternatively, or additionally, the visual alignment means may comprise the battery pole connector 800 comprising a straight edge. A vision system of a robot may recognise one or more of the edges of the battery pole connector 800 and compare their orientation with sides or edges of the circuit board 200. For example, the robot may be configured to, using the vision system, broadly or roughly rotationally align the battery pole connector 800 such that the circular arc of the pole connecting portion 102 faces the predetermined battery position. Note that the rotational alignment needs not be perfectly accurate, as the rotational symmetry of the pole connecting portion 102 relative to the projection 104 allows the pole connecting portion 102 to contact the battery 900 over an angular range of orientations.

Other examples of visual alignment means include one or more visual alignment indicators provided in or on the lifting surface 107 and/or the soldering portion 101. The alignment indicators may comprise, for example, a coloured (i.e. of different colour than another portion of the lifting surface 107) line, a notch, a mark, or the like, that can be identified by the robot vision system. For example, the robot vision system may recognise the coloured line and rotationally align the coloured line with one or reference lines, edges, or sides of the circuit board 200.

Alternatively, the robot may know the orientation of the circuit board 200, and rotationally align the one or more visual alignment means in dependence on the known orientation of the circuit board 200.

As shown in Fig. 10a, and similar to the previously described embodiments of battery pole connector 100, the pole connecting portion 102 of the battery pole connector 800 may extend away from the soldering portion 101, e.g. in a direction opposite to the direction in which the projection 104 protrudes. For example, the pole connecting portion 102 may be bent in a direction away, or opposite, from the projection 104, e.g. upwards in Fig. 10. This ensures that the portion of the pole connecting portion 102 that makes contact, either directly or indirectly, with the battery pole is located above the surface of the circuit board 200, e.g. at a side of the circuit board 200 where components are located. Thus, the battery pole connector 800 can be used in devices where the battery centre line (i.e. the longitudinal axis of the battery) is above the circuit board 200.

The pole connecting portion 102 may be bent away from the soldering surface (e.g. in a direction opposite to the projection) to form an arc of a circle or ellipse. An arc has been found to be a particularly strong shape that can withstand axial forces exerted by the battery making contact with the pole connecting portion 102.

Preferably the arc is an arc of at least 100 degrees, preferably at least 130 degrees, yet more preferably at least 150 degrees, optionally about 180 degrees. The arc may be less than 360 degrees, optionally less than 270 degrees, optionally less than about 230 degrees. Optionally the arc is an arc of substantially 90 degrees. The arc may define a portion that is bent and/or folded at least partly on itself. Additionally or alternatively, the pole connecting portion 102 may be bent to form substantially a semicircle or semi-ellipse. This will ensure a strong pole connecting portion 102 that can withstand large axial forces.

The arc may be followed by a substantially straight rim section for making contact with the battery 900. The straight rim section may be perpendicular to the flat soldering surface 103.

A surface of the pole connecting portion 102 away from the arc, e.g. the top surface in Fig. 10, may be inclined, rounded and/or smooth. The inclined, rounded and/or smooth surface may advantageously allow a battery 900 to be smoothly slid down along the pole connecting portion 102 into the battery's predetermined position. In particular, the inclined, rounded and/or smooth surface may lack any sharp edges on which a pole of a battery 900 (e.g. a protruding shallow cylinder at the positive pole of a common battery) may get stuck, preventing the battery 900 from reaching its intended position.

As shown in Fig. 10b, the pole connecting portion 102 of the battery pole connector 800 may alternatively, or additionally, be formed by an edge or side of the soldering portion 101. The pole connecting portion 102 may be a side of the soldering portion 101 perpendicular to the flat soldering surface 103 and/or the lifting surface 107. The pole connecting portion 102 may alternatively or additionally be a side of the soldering portion 101 between and/or connecting the lifting surface 107 and the flat soldering surface 103. The pole connecting portion 102 may alternatively or additionally be located between a plane of the lifting surface 107 and a plane of the flat soldering surface 103.

In particular, in embodiments where the soldering portion 101 is a substantially a plate, sheet and/or disc, the pole connecting portion 102 may be formed by a side of the soldering portion 101 surrounding the lifting surface 107 and/or the flat soldering surface 103. For example, in embodiments where the soldering portion 101 is an at least partially circular plate, sheet and/or disc, the pole connecting portion 102 may be a circumferential side of the soldering portion 101.

The battery pole connector 800 may be formed by deep drawing, e.g. from a substantially flat sheet or plate. In particular, the battery pole connector 800 may be formed by one or two or more deep drawing operations. For example, the projection 104 may be formed by a first deep drawing operation. The pole connecting portion 102 may be formed by a second deep drawing operation (e.g. by drawing down the soldering portion 101 so as to form the pole connecting portion 102). Alternatively both the projection 104 and the pole connecting portion 102 may be formed by the same deep drawing operation. A deep-drawn battery pole connector 800 is mechanically strong, and able to resist deformation during e.g. transport and/or handling. Deep drawing may also be performed for a variety of different projection shapes, giving greater design flexibility.

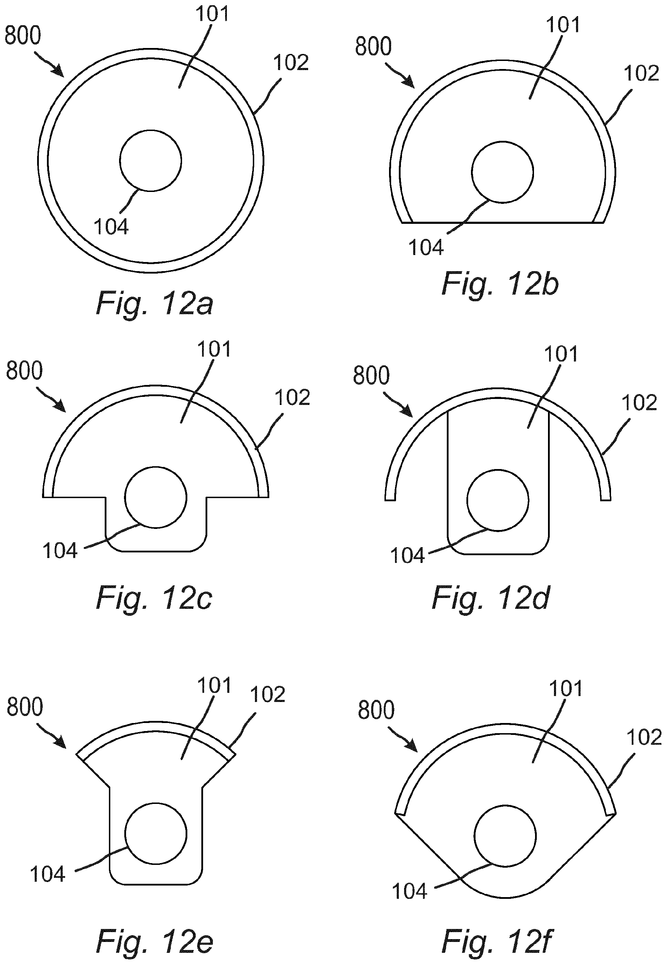

Figs. 12a to 12f show top views of battery pole connectors 800 according to embodiments.

Fig. 12a shows a battery pole connector 800 with a circular pole connecting portion 102 and a circular soldering portion 101.

Fig. 12b shows a battery pole connector 800 with a soldering portion 101 in the form of a circular segment and a pole connecting portion 102 extending along an edge of the soldering portion 101 so as to form a circular arc. The arc extends about 230 degrees.

Fig. 12c shows a battery pole connector 800 with a soldering portion 101 substantially in the form of a circular segment or a semi-circle. The pole connecting portion 102 extends along an edge of the soldering portion 101 so as to form a circular arc. The arc extends about 180 degrees.

Fig. 12d shows a battery pole connector 800 with a substantially rectangular soldering portion 101, and a pole connecting portion 102 forming a circular arc. The arc extends about 180 degrees.

Fig. 12e shows a battery pole connector 800 with a pole connecting portion 102 extending along an edge of the soldering portion 101 and forming a circular arc extending about 90 degrees.

Fig. 12f shows a battery pole connector 800 with a pole connecting portion 102 extending along an edge of the soldering portion 101 and forming a circular arc extending about 155 degrees.

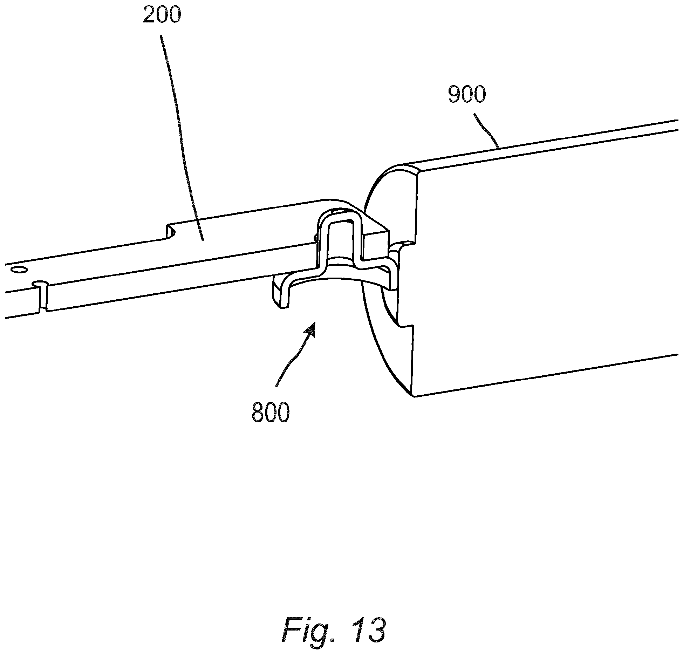

Fig. 13 shows a battery pole connector 800 attached to a circuit board 200. In particular, the projection 104 of the battery pole connector 800 is inserted into the opening 201 of the circuit board 200.

When attaching the battery pole connector 800 to the circuit board 200, and in particular when inserting the projection 104 into the opening 201, lateral alignment of the battery pole connector 800 relative to the circuit board 200 and the opening 201 is performed, such that the projection 104 coincides with the opening 201 in the circuit board 200. Importantly, the battery pole connector 800 need not be accurately rotationally aligned because of the rotational symmetry of the pole connecting portion 102 relative to the projection 104. The lateral alignment may be performed by any of the previously described methods for lateral alignment.

Once the battery pole connector 800 has been laterally aligned, the projection 104 may be inserted into the opening 201 and the flat soldering surface 103 may be lowered into contact with the circuit board 200, and in particular the contact pad 202 and/or the soldering paste provided on the contact pad 202.

After the flat soldering surface 103 has been lowered or pressed onto the contact pad 202 provided with soldering paste, a soldering process is performed to form a solder joint between the flat soldering surface 103 and the contact pad 202. It will be appreciated that although reference have been made to batteries and battery poles, the battery pole connectors 100 according to embodiments may be used to provide electrical contact between circuit boards 200 and any other electronic component.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A battery pole connector (100, 800) for providing an electrical connection between a battery pole and a circuit board (200), the battery pole connector (100, 800) comprising:
a soldering portion (101) having a flat soldering surface (103) for attachment to the circuit board (200); and
a pole connecting portion (102) for providing electrical contact to the battery pole;
wherein the soldering portion (101) is provided with at least one projection (104) for insertion into an opening (201) of the circuit board (200), the projection (104) protruding from the flat soldering surface (103), the projection (104) comprising:
a displaced section (106) arranged at a distance from the flat soldering surface (103), and
a wall section (105) protruding from the soldering portion (101) and connecting the soldering portion (101) to an outer edge of the displaced section (106);
the battery pole connector (100, 800) being **characterised in that**:
the pole connecting portion (102) forms substantially a circular arc, and
a central axis of the projection (104) substantially coincides with a centre of curvature of the circular arc.

2. The battery pole connector (100, 800) according to claim 1, wherein the pole connecting portion (102) is substantially circular or cylindrical.

3. The battery pole connector (100, 800) according to claim 1 or 2, wherein the soldering portion (101) is substantially circular and the pole connecting portion (102) extends around a circumference of the soldering portion (101).

4. The battery pole connector (100, 800) according to claim 1, wherein the soldering portion (101) substantially forms a circular segment or a circular sector and wherein the pole connecting portion (102) extends along an edge of the soldering portion (101).

5. The battery pole connector (100, 800) according to any preceding claim,
wherein the soldering portion (101) comprises a lifting surface (107) opposite the flat soldering surface (103) for application of a suction pressure by a suction cup.

6. The battery pole connector (100, 800) according to any preceding claim,
wherein the pole connecting portion (102) extends at least partially away from the soldering portion (101) in a direction opposite to the projection (104).

7. The battery pole connector (100, 800) according to any preceding claim,
wherein the circular arc extends at least 45 degrees, optionally at least 60 degrees, optionally at least 90 degrees, optionally at least 120 degrees, optionally at least 150 degrees, optionally at least 180 degrees, optionally at least 225 degrees, optionally at least 270 degrees, optionally substantially 360 degrees.

8. A circuit board (200) comprising an opening (201) for receiving a projection (104) of a battery pole connector (100, 800), and at least one battery pole connector (100, 800) according to any preceding claim, wherein the battery pole connector (100, 800) is attached to the circuit board (200) in an electrically conductive manner, wherein the pole connecting portion (102) of the battery pole connector (100, 800) at least partially extends past an edge of the circuit board (200).

9. An alarm system device comprising:
a circuit board (200) according to claim 8; and
at least one battery arranged to make contact with the pole connecting portion (102) of the at least one battery pole connector (100, 800).

10. A battery pole connector (100, 800) for providing an electrical connection between a battery pole and a circuit board (200), the battery pole connector (100) comprising:
a soldering portion (101) having a flat soldering surface (103) for attachment to the circuit board (200) and a lifting surface (107) opposite the flat soldering surface (103) for application of a suction pressure by a suction cup,
a pole connecting portion (102) for providing electrical contact to the battery pole,
wherein the soldering portion (101) is provided with at least one projection (104) for insertion into an opening (201) of the circuit board (200), the projection (104) protruding from the flat soldering surface (103), the projection (104) comprising:
a displaced section (106) arranged at a distance from the flat soldering surface (103), and
a wall section (105) protruding from the soldering portion (101) and connecting the soldering portion (101) to an outer edge of the displaced section (106);
wherein the pole connecting portion (102) extends at least partially away from the soldering portion (101) in a direction opposite to the projection (104).

11. The battery pole connector (100, 800) according to claim 10, wherein the pole connecting portion (102) forms substantially a circular arc, and a central axis of the projection (104) substantially coincides with a centre of curvature of the circular arc.

12. The battery pole connector (100, 800) according to claim 10 or 11, wherein the pole connecting portion (102) comprises a sheet, at least a portion of which is bent into a rounded shape, wherein optionally the bent portion of the sheet has a shape of an arc of a circle or ellipse, wherein optionally the arc defines a portion of the sheet that is bent at least partly on itself.

13. The battery pole connector (100, 800) according to claim 12, wherein:
the arc is an arc of at least 100 degrees, optionally at least 130 degrees, optionally at least 150 degrees, optionally at least 180 degrees; and/or
the arc has an angle of less than 360 degrees, optionally less than 270 degrees, optionally less than 230 degrees.

14. A method of attaching a battery pole connector (100, 800) to a circuit board (200), the method comprising:
providing a battery pole connector (100, 800) for providing an electrical connection between a battery pole and a circuit board (200),
lifting the battery pole connector (100, 800) by means of a robot applying a suction pressure to a lifting surface (107) of the battery pole connector (100),
rotationally aligning, using a vision system of the robot, the battery pole connector (100, 800) in dependence on one or more visual alignment means of the battery pole connector (100, 800),
placing a projection (104) of the battery pole connector (100, 800) into an opening (201) of the circuit board (200), and
soldering the battery pole connector (100, 800) to the circuit board (200).

15. The method according to claim 14, wherein the battery pole connector (100, 800) comprises:
a soldering portion (101) having a flat soldering surface (103) for attachment to the circuit board (200) and a lifting surface (107) for application of a suction pressure, and
a pole connecting portion (102) for providing electrical contact to the battery pole;
wherein the soldering portion (101) is provided with at least one projection (104) for insertion into the opening (201) of the circuit board (200), the projection (104) protruding from the flat soldering surface (103), the projection (104) comprising:
a displaced section (106) arranged at a distance from the flat soldering surface (103), and
a wall section (105) protruding from the soldering portion (101) and connecting the soldering portion (101) to an outer edge of the displaced section (106),
wherein the pole connecting portion (102) of the battery pole connector (100, 800) forms substantially a circular arc, and a central axis of the projection (104) substantially coincides with a centre of curvature of the circular arc.

16. The method according to claim 14 or 15, wherein the visual alignment means comprises:
the lifting surface (107) and/or the soldering portion (101) having two or more edges or sides that are perpendicular to each other;
the lifting surface (107) and/or the soldering portion (101) having a rectangular or square shape;
the battery pole connector (100, 800) having a circular edge, a straight edge, or an edge in the shape of an arc; and/or
one or more visual alignment indicators provided in or on the lifting surface (107) and/or the soldering portion (101).
